# EUROPEAN PATENT SPECIFICATION

(11) **EP 3 898 411 B1**
(45) Date of publication and mention of the grant of the patent: **03.05.2023**
(21) Application number: 18833149.0
(22) Date of filing: 20.12.2018
(51) Int. Cl.: B64C 9/14, B64C 21/02

(54) **AERODYNAMIC SEALS TO REDUCE AERODYNAMIC NOISE ASSOCIATED WITH AIRCRAFT HIGH LIFT CONTROL SURFACES**
AERODYNAMISCHE DICHTUNGEN ZUR VERMINDERUNG DES AERODYNAMISCHEN LÄRMS IN VERBINDUNG MIT HOCHAUFTRIEBSSTEUERFLÄCHEN VON FLUGZEUGEN
JOINTS AÉRODYNAMIQUES POUR RÉDUIRE LE BRUIT AÉRODYNAMIQUE ASSOCIÉ À DES SURFACES DE COMMANDE D'HYPERSUSTENTION D'AÉRONEF

(43) Date of publication of application: 27.10.2021
(73) Proprietor: Embraer S.A., São José dos Campos, 12227-901-SP (BR); Universidade de São Paulo - USP, 05508-220 São Paulo (BR)
(72) Inventor: REIS, Danilo Cafaldo dos, 12227-901 SÃO JOSÉ DOS CAMPOS SP (BR); SIMÕES, Leandro Guilherme Crenite, 12227-901 SÃO JOSÉ DOS CAMPOS SP (BR); CARMO, Micael Gianini Valle do, 12227-901 SÃO JOSÉ DOS CAMPOS SP (BR); COELHO, Eduardo Lobão Capucho, 12227-901 SÃO JOSÉ DOS CAMPOS SP (BR); KLUG, Francisco Keller, 12227-901 SÃO JOSÉ DOS CAMPOS SP (BR); CATALANO, Fernando Martini, 13561-207 SÃO CARLOS SP (BR); SOUZA, Joabe Marcos de, 12227-901 SÃO JOSÉ DOS CAMPOS SP (BR); PEREIRA, Lourenço Tércio Lima, 12227-901 SÃO JOSÉ DOS CAMPOS SP (BR)
(74) Representative: Liesegang, Eva
(86) International application number: PCT/BR2018/000077
(87) International publication number: WO 2020/124172

(56) References cited:
- EP-A1- 3 042 848
- EP-A2- 2 746 152
- US-A1- 2010 294 883
- US-B1- 9 132 909

## Description

### FIELD

The embodiment disclosed herein relate generally to devices that suppress aerodynamic noise generated by an aircraft's high lift components, e.g., forward edge slats and/or trailing edge wing flaps. In especially preferred embodiments, a high lift component of an aircraft wing (e.g., forward edge slats and/or trailing edge wing flaps) are provided with an aerodynamic seal element having an outwardly extended section terminating in a downwardly extended section.

### BACKGROUND

The noise emitted from an aircraft during take-off and landing phases of flight is one of the biggest issues of urban noise pollution in big cities. For this reason, the aerospace community has been committed to reducing such noise levels. In this regard, the maximum noise allowed for an aircraft is regulated during the government type certification process, for example, type certification pursuant to the noise standard rules of the US Federal Aviation Administration (FAA) found in 14 CFR Part 36. More recent years have seen this certification requirement imposing more restrictive noise levels on aircraft.

The progressive introduction of larger and more energy efficient turbofan engines has significantly reduced noise emanating from aircraft engine operation during landing and take-off phases of flight. However, the non-propulsive part of the airplane structure (airframe) has become a major source of aerodynamic noise, mainly during approach and landing phases of flight. One of the most relevant airframe noise sources for current airframe designs includes the high-lift devices associated with the aircraft wings, specially the flap side edges when the flaps are deployed.

Various proposals exist in the art for reducing aerodynamic noise associated with a wing's high lift components as evidenced by US Patent Nos. 6491260, 9132909 and 8657236. In this regard, US Patent No. 6491260 proposes adding vortex generators to the flap side edge, while US Patent No. 9132909 proposes a porous flap side edge along the entire structure and US Patent No. proposes adding a planar perforated seal to the flap side edge, working as an aerodynamic seal when the flap is stowed and working as a noise reduction mechanism when the flap is deployed.

More recently, US Patent No. 8657236 has proposed providing an aerodynamic seal on at least one high-lift flap of an aircraft, wherein the aerodynamic seal comprises a planar perforated blade seal strip element arranged along and outwardly extending from at least one of the upper and lower profile edges at each of the outboard and inboard ends of the flap and extending a predetermined distance between the leading and trailing edges thereof.

While the proposals in the prior art may provide the intended goal of reducing aerodynamic noise generated from an aircraft's high-lift components when deployed, further improvement is desired. It is towards providing such improvements that the embodiments disclosed herein are directed.

### SUMMARY

The embodiments disclosed herein are directed toward aircraft wings and aircraft comprising the same which include at least one high-lift system (e.g., a high-lift flap) and an aerodynamic seal associated operatively with the high-lift system, the aerodynamic seal comprising a one-piece (unitary) non-planar angulated structure which includes an outwardly extended planar section having a proximal edge joined to the at least one high-lift flap at the outboard and/or inboard ends thereof, and a downwardly extended planar section joined at an angle to a terminal edge of the outwardly extended planar section.

According to certain embodiments, the outwardly and/or downwardly extended planar sections include perforations. The perforations may be honeycomb-shaped. The perforations if present may define at least about 20% (sometimes between about 30% to about 50%) open area of a total surface area of the outwardly and downwardly extended sections.

According to some embodiments, the outwardly extended planar portion will have outward dimension D1, and wherein the downwardly extended planar portion has a downward dimension D3 which is about one-third (1/3) of the dimension D1. The seal element may be positioned near a trailing edge of at least one high-lift flap so as to extend forwardly toward a leading edge of the at least one high-lift flap by a dimension D2 which is between about 0.25 to about 0.75 of a chord line dimension of the at least one high-lift flap between the leading and trailing edges thereof.

The outwardly and downwardly extended planar sections are angularly joined to one another, for example, so as to form an edge defining a relatively sharp square 90° bend. Alternatively, the outwardly and downwardly extended planar sections may be joined together by an arcuate transition section which may have a radius of curvature R which is between about 0.25 to about 0.75 of an outwardly extended dimension of the outwardly extended planar section.

These and other aspects and advantages of the present invention will become more clear after careful consideration is given to the following detailed description of the preferred exemplary embodiments thereof.

### BRIEF DESCRIPTION OF ACCOMPANYING DRAWINGS

The disclosed embodiments of the present invention will be better and more completely understood by referring to the following detailed description of exemplary non-limiting illustrative embodiments in conjunction with the drawings of which:
FIG. 1 is a top plan view of a starboard side wing of an aircraft provided with high lift devices including a plurality of flaps and slats that may employ the aerodynamic seals as described herein;
FIG. 2 is a schematic perspective view of a high lift flap associated with the aircraft of FIG. 1 which includes a perforated aerodynamic seal in accordance with an embodiment of the invention;
FIG. 3 is a schematic perspective view of a high lift flap associated with the aircraft of FIG. 1 which includes a perforated aerodynamic seal in accordance with another embodiment of the invention;
FIG. 3A is an enlarged detailed view of a portion of the aerodynamic seal as shown by the chain line in FIG. 3; and
FIG. 4 is a graph of results of wind tunnel testing of an aerodynamic seal element according to the embodiment depicted in FIG. 4 versus a control.

### DETAILED DESCRIPTION

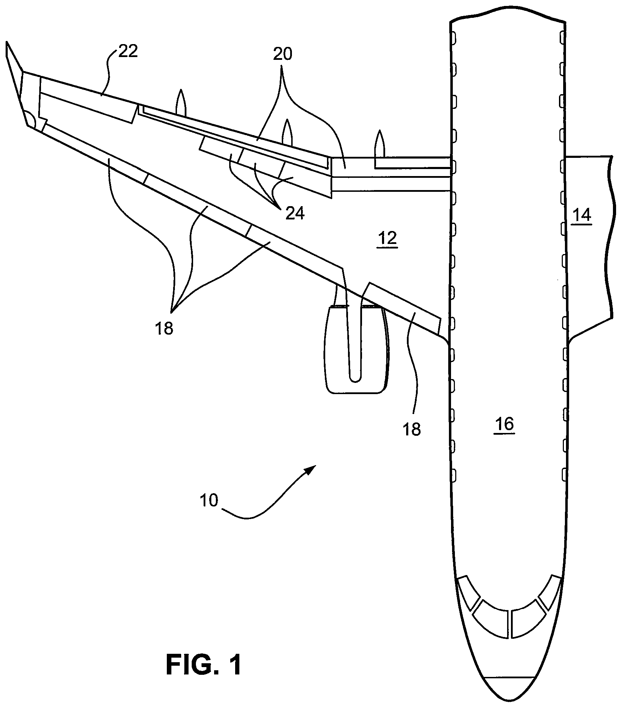

FIG. 1 depicts an aircraft 10 which includes starboard and port wings 12, 14, respectively, extending laterally from an elongate fuselage 16. It will be understood in this regard that the port wing 14 is a mirror image of the starboard wing 12 and thus a description of the latter and its various structural elements is applicable to the former. Thus, the description will hereinafter reference only the starboard wing 12 but is similarly applicable to the port wing 14.

As shown, the wing 12 includes a high lift system comprised of moveable forward edge adjacent slats 18 and moveable trailing edge adjacent wing flaps 20. The wing 12 may also include other moveable control surfaces, such as an aileron 22 to effect roll control of the fuselage 16 and spoilers 24 to effect airspeed control when deployed.

The reduction of the aerodynamic generated noise becomes significant during approach and landing phase of the flight of an aircraft. During take-off procedures, the engines are set at full power and noise generated by the high lift devices is generally masked. Moreover, for the majority of take-off procedures, both slats and flaps are only partially extended and retracted shortly after the aircraft has lifted from the runway in order to improve the lift-over-drag ratio. However, during the landing phase of flight when the aircraft 10 is close to the ground, both the forward edge slats 18 and the trailing edge flaps 20 are typically fully extended while engine power is substantially reduced. As a consequence, noise emanating from the slats 18 and/or flaps 20 becomes more problematic during the landing phase of flight and therefore needs to be controlled.

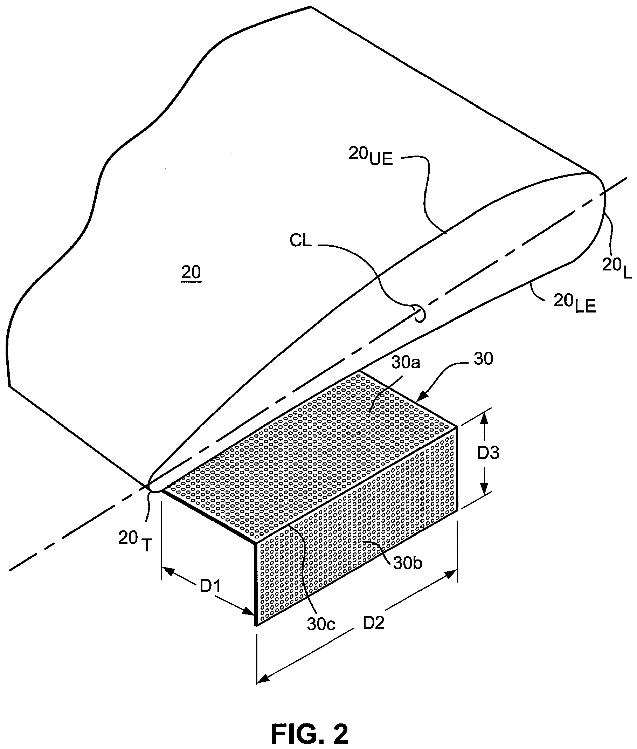

Accompanying FIG. 2 depicts one embodiment of a fixed (non-moveable) aerodynamic seal element 30 affixed to one of the wing flaps 20 at an outboard end thereof, it being understood that a similar structural arrangement would be present at an inboard end of the wing flap which is not shown. The wing flap 20 is in and of itself conventional in that it has leading and trailing edges 20_{L}, 20_{T} which define therebetween an upper lift surface defining an upper edge profile 20_{UE} and a lower pressure surface defining a lower edge profile 2U_{LE}. The wing flap 20 also includes a chord line CL between the leading and trailing edges 20_{L}, 20_{T}, respectively.

In the embodiment depicted, the seal element 30 is a one-piece (unitary) non-planar angulated plate structure comprised of an outwardly extended planar section 30a and a downwardly extended planar section 30b having a proximal edge which is integrally joined at an angle to the distal edge of the former. In the embodiment depicted, the outwardly and downwardly extended planar sections 30a, 30b are joined integrally (unitarily) to one another at a relatively sharp edge 30c such that the sections 30a, 30b form a substantially 90° square bend at the edge 30c.

The outwardly and/or downwardly extended planar sections 30a, 30b, respectively, may be perforated or non-perforated. In the embodiment depicted both the outwardly and downwardly extended planar sections 30a, 30b are perforated. In preferred embodiments, the outwardly and downwardly extended planar sections 30a, 30b are perforated to an extent that at least about 20%, preferably at least about 30% up to and including about 70%, preferably up to and including about 50% of the total surface areas of the planar sections 30a and 30b include perforations or open areas. In an especially preferred embodiment, about 33% (+/- 5%) of the total surface areas of the planar sections 30a and 30b include perforations or open areas.

In the embodiment depicted in FIG. 2, the proximal edge of the outwardly extended planar section 30a is positionally fixed to the wing flap 20 at the lower edge 20_{LE} thereof. The outwardly extended planar section 30a has an outwardly (widthwise) dimension D1 while the downwardly extended planar portion 30b has a downwardly (depthwise) dimension D3 which is preferably one-third (1/3) the dimension of D1 (i.e., D3=1/3*D1). It will also be observed in FIG. 2 that the seal element 30 is preferably positioned near the trailing edge 20_{T} of the wing flap 20 so as to extend forwardly along the lower edge 20_{LE} thereof by a (lengthwise) distance of D2. In the embodiment depicted, distance D2 is between about 0.25 to about 0.75 of the length of the chord line CL between the leading and trailing edges 20_{L}, 20_{T}, and more preferably about 0.50 (+/-0.10) the length of the chord line CL.

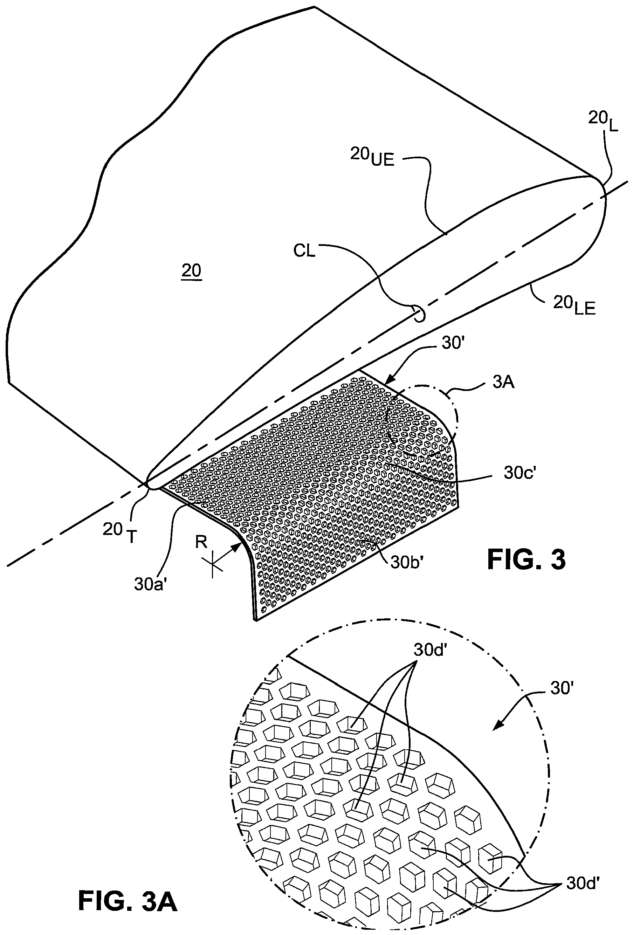

A further embodiment of an aerodynamic seal element 30' is depicted in FIGS. 3 and 3A. In this regard, the seal element 30' is dimensionally similar to the seal element 30 described previously with respect to FIG. 2 with one principal exception being that the perforations are an array of honeycomb-shaped apertures, a representative few of which are identified by reference numeral 30d' in FIG. 3A. The effective diameter of the apertures 30d' (i.e., as measured between opposed interior walls of the honeycomb structure) is preferably between about 0.2 mm to about 1.0 mm, preferably between about 0.5 mm to about 0.7 mm, and typically about 0.6 mm (+/- 0.05 mm).

Another principal difference between the seal element 30' depicted in FIG. 3 and the seal element 30 depicted in FIG. 2 is that the former includes an arcuate transition 30c' between the outwardly extended planar portion 30a' and the downwardly extended planar portion 30b'. In some embodiments, such actuate transition 30c' will have a radius of curvature R of between about 0.25 to about 0.75, preferably about 0.50, of the dimension D1 of the outwardly extended section 30a'.

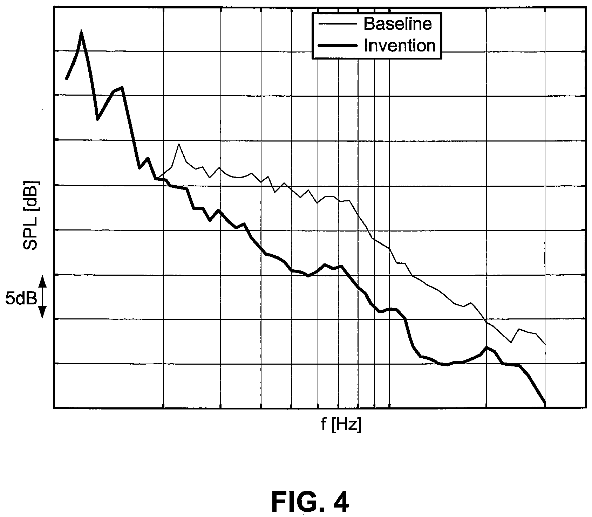

Accompanying FIG. 4 shows the wind tunnel testing data of an aerodynamic seal element for a high-lift flap in accordance with the embodiment of FIG. 3 showing the noise reduction achieved thereby in comparison to a baseline high-lift flap not including such a seal element.

It will be understood that various modifications within the skill of those in the art may be envisioned. Therefore, while the invention has been described in connection with what is presently considered to be the most practical and preferred embodiment, it is to be understood that the invention is not to be limited to the disclosed embodiment, but on the contrary, is intended to cover various modifications falling within the scope of the invention, which is defined by the appended claims.

## Claims

1. An aircraft wing comprising a high-lift system which includes at least one high-lift flap (20), wherein
the at least one high-lift flap (20) comprises leading and trailing edges (20L, 20T) and upper and lower surfaces defining upper and lower profile edges between the leading and trailing edges (20L, 20T) at outboard and inboard ends of the flap (20), and wherein the at least one high-lift flap (20) includes an aerodynamic seal (30; 30') for reduction of noise aerodynamically generated by the at least one high-lift flap (20) of the aircraft (10), and wherein the aerodynamic seal (30; 30') comprises a non-planar angulated plate structure comprised of:
(i) an outwardly extended planar section (30a; 30a') having a proximal edge joined to the at least one high-lift flap (20) at the outboard and/or inboard ends thereof, and
(ii) a downwardly extended planar section (30b; 30b') joined at an angle to a distal edge of outwardly extended planar section (30a; 30a').

2. The aircraft wing according to claim 1, wherein the outwardly and/or downwardly extended planar sections (30a, 30b; 30a', 30b') include perforations.

3. The aircraft wing according to claim 2, wherein the perforations are honeycomb-shaped perforations.

4. The aircraft wing according to claim 2, wherein the perforations define at least 20% open area of a total surface area of the outwardly and downwardly extended planar sections (30a, 30b; 30a', 30b').

5. The aircraft wing according to claim 2, wherein the perforations define between 30% to 50% open area of a total surface area of the outwardly and downwardly extended planar sections (30a, 30b; 30a', 30b').

6. The aircraft wing according to claim 1, wherein the outwardly extended planar section (30a; 30a') has an outward dimension D1, and wherein the downwardly extended planar section (30b; 30b') has a downward dimension D3 which is one-third of the dimension D1

7. The aircraft wing according to claim 6, wherein the seal (30; 30') is positioned near a trailing edge (20L, 20T) of the at least one high-lift flap (20) and extends forwardly toward a leading edge of the at least one high-lift flap (20) by a dimension D2 which is between 0.25 to 0.75 of a chord line dimension of the at least one high-lift flap (20) between the leading and trailing edges (20L, 20T) thereof.

8. The aircraft wing according to claim 1, wherein the outwardly and downwardly extended planar sections (30a, 30b; 30a', 30b') are joined at an angle to form a bent edge forming a square 90° bend.

9. The aircraft wing according to claim 1, wherein the outwardly and downwardly extended planar sections (30a', 30b') are joined together at an angle to form an arcuate transition section (30c').

10. The aircraft wing according to claim 9, wherein the arcuate transition section (30c') has a radius of curvature R which is between 0.25 to 0.75 of an outwardly extended dimension of the outwardly extended planar section (30a').

11. The aircraft wing according to claim 9, wherein the outwardly and/or downwardly extended planar sections (30a, 30b; 30a', 30b') include perforations.

12. The aircraft wing according to claim 11, wherein the perforations are honeycomb-shaped perforations.

13. The aircraft wing according to claim 11, wherein the perforations define at least 20% open area of a total surface area of the outwardly and downwardly extended planar sections (30a, 30b; 30a', 30b'), more particularly between 30% to 50% open area of a total surface area of the outwardly and downwardly extended planar sections (30a, 30b; 30a', 30b').

14. The aircraft wing according to claim 12, wherein the honeycomb-shaped perforations have an effective diameter of between 0.2 mm to 1.0 mm; or of 0.6 mm +/- 0.05 mm.

15. An aircraft (10) which comprises the aircraft wing of one of the preceding claims.

## Patentansprüche

1. Flugzeugtragfläche aufweisend ein Hochauftriebssystem, welches mindestens eine Hochauftriebsklappe (20) aufweist, wobei
die mindestens eine Hochauftriebsklappe (20) eine Vorderkante und eine Hinterkante (20L, 20T) und eine obere und eine untere Fläche, welche eine obere und eine untere Profilkante zwischen der Vorderkante und der Hinterkante (20L, 20T) am äußeren und am inneren Ende der Klappe (20) definieren, aufweist, und wobei die mindestens eine Hochauftriebsklappe (20) eine aerodynamische Abdichtung (30; 30') zur Reduzierung von Lärm, welcher durch die mindestens eine Hochauftriebsklappe (20) des Flugzeugs (10) aerodynamisch erzeugt wird, aufweist, und wobei die aerodynamische Abdichtung (30; 30') eine nicht planare abgewinkelte Plattenstruktur aufweist, welche:
(i) einen sich nach außen erstreckenden planaren Abschnitt (30a; 30a'), welcher eine proximale Kante, welche mit der mindestens einen Hochauftriebsklappe (20) an deren äußerem und innerem Ende verbunden ist, aufweist, und
(ii) einen sich nach unten erstreckenden planaren Abschnitt (30b; 30b'), welcher in einem Winkel mit einer distalen Kante des sich nach außen erstreckenden planaren Abschnitt (30a; 30a') verbunden ist, aufweist.

2. Flugzeugtragfläche nach Anspruch 1, wobei der sich nach außen und/oder der sich nach unten erstreckende planare Abschnitt (30a, 30b; 30a', 30b') Perforationen aufweist.

3. Flugzeugtragfläche nach Anspruch 2, wobei die Perforationen wabenförmige Perforationen sind.

4. Flugzeugtragfläche nach Anspruch 2, wobei die Perforationen mindestens 20 % offene Fläche einer Gesamtfläche des sich nach außen und des sich nach unten erstreckenden planaren Abschnitts (30a, 30b; 30a', 30b') definieren.

5. Flugzeugtragfläche nach Anspruch 2, wobei die Perforationen zwischen 30 % und 50 % offene Fläche einer Gesamtfläche des sich nach außen und des sich nach unten erstreckenden planaren Abschnitts (30a, 30b; 30a', 30b') definieren.

6. Flugzeugtragfläche nach Anspruch 1, wobei der sich nach außen erstreckende planare Abschnitt (30a; 30a') eine Abmessung D1 nach außen aufweist, und wobei der sich nach unten erstreckende planare Abschnitt (30b; 30b') eine Abmessung D3 nach unten aufweist, welche einem Drittel der Abmessung D1 entspricht.

7. Flugzeugtragfläche nach Anspruch 6, wobei die Abdichtung (30; 30') in der Nähe einer Hinterkante (20L, 20T) der mindestens einen Hochauftriebsklappe (20) angeordnet ist und sich um eine Abmessung D2, welche zwischen 0,25 und 0,75 einer Profilsehnenabmessung der mindestens einen Hochauftriebsklappe (20) zwischen deren Vorderkante und der Hinterkante (20L, 20T) entspricht, in Richtung einer Vorderkante der mindestens einen Hochauftriebsklappe (20) erstreckt.

8. Flugzeugtragfläche nach Anspruch 1, wobei der sich nach außen und der sich nach unten erstreckende planare Abschnitt (30a, 30b; 30a', 30b') in einem Winkel miteinander verbunden sind, um eine gebogene Kante, welche eine quadratische 90°-Biegung bildet, zu bilden.

9. Flugzeugtragfläche nach Anspruch 1, wobei der sich nach außen und der sich nach unten erstreckende planare Abschnitt (30a', 30b') in einem Winkel miteinander verbunden sind, um einen bogenförmigen Übergangsabschnitt (30c') zu bilden.

10. Flugzeugtragfläche nach Anspruch 9, wobei der bogenförmige Übergangsabschnitt (30c') einen Krümmungsradius R aufweist, welcher zwischen 0,25 und 0,75 einer sich nach außen erstreckenden Abmessung des sich nach außen erstreckenden planaren Abschnitts (30a') entspricht.

11. Flugzeugtragfläche nach Anspruch 9, wobei der sich nach außen und/oder der sich nach unten erstreckende planare Abschnitt (30a, 30b; 30a', 30b') Perforationen aufweist.

12. Flugzeugtragfläche nach Anspruch 11, wobei die Perforationen wabenförmige Perforationen sind.

13. Flugzeugtragfläche nach Anspruch 11, wobei die Perforationen mindestens 20 % offene Fläche einer Gesamtfläche des sich nach außen und des sich nach unten erstreckenden planaren Abschnitts (30a, 30b; 30a', 30b'), insbesondere zwischen 30 % und 50 % offene Fläche der Gesamtfläche des sich nach außen und des sich nach unten erstreckenden planaren Abschnitts (30a, 30b; 30a', 30b'), definieren.

14. Flugzeugtragfläche nach Anspruch 12, wobei die wabenförmigen Perforationen einen effektiven Durchmesser von zwischen 0,2 mm und 1,0 mm; oder von 0,6 mm +/- 0,05 mm, aufweisen.

15. Flugzeug (10), welches die Flugzeugtragfläche nach einem der vorstehenden Ansprüche aufweist.

## Revendications

1. Aile d'aéronef comprenant un système d'hypersustentation qui comprend au moins un volet hypersustentateur (20), dans laquelle
le au moins un volet hypersustentateur (20) comprend des bords d'attaque et de fuite (20L, 20T) et des surfaces supérieures et inférieures qui définissent des bords de profilés supérieurs et inférieurs entre les bords d'attaque et de fuite (20L, 20T) aux extrémités externes et internes du volet (20), et dans laquelle le au moins un volet hypersustentateur (20) comprend un joint aérodynamique (30 ; 30') destiné à réduire le bruit généré de manière aérodynamique par le au moins un volet hypersustentateur (20) de l'aéronef (10), et dans laquelle le joint aérodynamique (30 ; 30') comprend une structure de plaque anguleuse non plane composée de :
(i) une section plane qui s'étend vers l'extérieur (30a ; 30a') ayant un bord proximal joint au au moins un volet hypersustentateur (20) aux extrémités externes et/ou internes de celui-ci, et
(ii) une section plane qui s'étend vers le bas (30b ; 30b') jointe à un angle par rapport à un bord distal de la section plane qui s'étend vers l'extérieur (30a ; 30a').

2. Aile d'aéronef selon la revendication 1, dans laquelle les sections planes qui s'étendent vers l'extérieur et/ou vers le bas (30a, 30b ; 30a', 30b') comprennent des perforations.

3. Aile d'aéronef selon la revendication 2, dans laquelle les perforations sont des perforations en forme de nids d'abeille.

4. Aile d'aéronef selon la revendication 2, dans laquelle les perforations définissent au moins 20 % de surface ouverte d'une surface totale des sections planes qui s'étendent vers l'extérieur et vers le bas (30a, 30b ; 30a', 30b').

5. Aile d'aéronef selon la revendication 2, dans laquelle les perforations définissent entre 30 % et 50 % de surface ouverte d'une surface totale des sections planes qui s'étendent vers l'extérieur et vers le bas (30a, 30b ; 30a', 30b').

6. Aile d'aéronef selon la revendication 1, dans laquelle la section plane qui s'étend vers l'extérieur (30a ; 30a') possède une dimension extérieure D1, et dans laquelle la section pane qui s'étend vers le bas (30b ; 30b') possède une dimension descendante D3 qui est égale à un tiers de la dimension D1.

7. Aile d'aéronef selon la revendication 6, dans laquelle le joint (30 ; 30') est positionné près d'un bord de fuite (20L, 20T) du au moins un volet hypersustentateur (20) et s'étend vers l'avant vers un bord d'attaque du au moins un volet hypersustentateur (20) selon une dimension D2 qui est comprise entre 0,25 et 0,75 d'une dimension de ligne de corde du au moins un volet hypersustentateur (20) entre les bords d'attaque et de fuite (20L, 20T) de celui-ci.

8. Aile d'aéronef selon la revendication 1, dans laquelle les sections planes qui s'étendent vers l'extérieur et vers le bas (30a, 30b ; 30a', 30b') sont jointes à un angle afin de former un bord cintré qui forme un cintrage carré à 90°.

9. Aile d'aéronef selon la revendication 1, dans laquelle les sections planes qui s'étendent vers l'extérieur et vers le bas (30a', 30b') sont jointes ensemble une section de transition arquée (30c').

10. Aile d'aéronef selon la revendication 9, dans laquelle la section de transition arquée (30c') possède un rayon de courbure R qui est compris entre 0,25 et 0,75 d'une dimension qui s'étend vers l'extérieur de la section plane qui s'étend vers l'extérieur (30a').

11. Aile d'aéronef selon la revendication 9, dans laquelle les sections planes qui s'étendent vers l'extérieur et/ou vers le bas (30a, 30b ; 30a', 30b') comprennent des perforations.

12. Aile d'aéronef selon la revendication 11, dans laquelle les perforations sont des perforations en forme de nids d'abeille.

13. Aile d'aéronef selon la revendication 11, dans laquelle les perforations définissent au moins 20 % de surface ouverte d'une surface totale des sections planes qui s'étendent vers l'extérieur et vers le bas (30a, 30b ; 30a', 30b'), plus particulièrement entre 30 % et 50 % de surface ouverte d'une surface totale des sections planes qui s'étendent vers l'extérieur et vers le bas (30a, 30b ; 30a', 30b').

14. Aile d'aéronef selon la revendication 12, dans laquelle les perforations en forme de nids d'abeille possèdent un diamètre effectif compris entre 0,2 mm et 1 mm ; ou de 0,6 mm +/- 0,05 mm.

15. Aéronef (10) qui comprend l'aile d'aéronef selon l'une des revendications précédentes.
